# NEUE EUROPÄISCHE PATENTSCHRIFT

(11) **EP 2 484 602 B2**
(45) Veröffentlichungstag und Bekanntmachung des Hinweises auf die Entscheidung über den Einspruch: **23.02.2022**
(45) Hinweis auf die Patenterteilung: 24.08.2016
(21) Anmeldenummer: 11153390.7
(22) Anmeldetag: 04.02.2011
(51) Int. Cl.: B65D 63/10, B65D 65/46, B29D 29/00

(54) **Umreifungsbänder aus nachwachsenden Rohstoffen**
Straps made of renewable materials
Sangles en matières renouvelables

(43) Veröffentlichungstag der Anmeldung: 08.08.2012
(73) Patentinhaber: Mosca GmbH, 69429 Waldbrunn (DE)
(72) Erfinder: Eberle, Ulrich, Dr., 70794 Filderstadt (DE)
(74) Vertreter: Freischem & Partner Patentanwälte mbB

(56) Entgegenhaltungen:
- EP-A1- 2 096 141
- WO-A1-93/00210
- WO-A1-93/00210
- DE-U1- 9 419 475
- DE-U1- 29 520 449
- JP-A- H1 024 492
- JP-A- H11 165 338
- JP-A- H11 277 640
- JP-A- 2003 072 828
- JP-A- 2009 013 343
- US-B2- 6 984 694
- DATABASE WPI Week 200342 Thomson Scientific, London, GB; AN 2003-443639 XP002647731, -& JP 2002 348445 A (DAN SANGYO KK) 4. Dezember 2002 (2002-12-04)
- DATABASE WPI Week 200429 Thomson Scientific, London, GB; AN 2004-308461 XP002647732, -& JP 2004 034994 A (MITSUI CHEM INC) 5. Februar 2004 (2004-02-05)
- DATABASE WPI Week 200116 Thomson Scientific, London, GB; AN 2001-154749 XP002647733, -& JP 2001 019027 A (UNITIKA LTD) 23. Januar 2001 (2001-01-23)
- DATABASE WPI Week 200365 Thomson Scientific, London, GB; AN 2003-683005 XP002647734, -& JP 2003 072828 A (UNITIKA LTD) 12. März 2003 (2003-03-12)
- I. Moura et al: Synthesis of Biodegradable Copolymers based on Ethylene Vinyl Acetate and Polylactic Acid , Materials Science Forum, ISSN: 1662-9752, Vols. 636-637, pp 819-824
- A.S.M. Elhassan et al: Modification of PLA with Chain Extender", Applied Mechanics and Materials, Vols 716-717 (2015), pp 44-47
- R.F. Grossman et al: "Poly(lactic acid) Synthesis, Structures, Properties, Processing and Applications , Wiley series on polymer engineering and technology
- V.H.Orozco et al: "Preparation and Characterization of Poly(Lactic Acid)-g-Maleic Anhydride + Starch Blends", Macromol. Symp. 2009, 277, pp 69-80
- M. Avella et al: "Poly(Lactic Acid)-Based Biocomposites Reinforced with Kenaf Fibers", Journal of Applied Polymer Science, June 2008. pp 3542-3551
- V. Frenz et al: "Multifunctional Polymers as Chain Extenders and Compatibilizers for Polycondensates and Biopolymers'. ANTEC 2008, pp 1682-1686

## Beschreibung

Die Erfindung betrifft ein extrudiertes und mit sich selbst verschweißbares Umreifungsband aus einem Material, das nachwachsenden Rohstoff enthält, sowie ein Verfahren zu dessen Herstellung und ein Verfahren zum Umreifen eines Objektes.

Mitte der 90er Jahre wurden Bänder für Verpackungszwecke entwickelt, die aus biologisch vollständig abbaubaren Materialien bestanden. Diese Bänder enthielten überwiegend Stärke. Diese Bänder konnten zwar prinzipiell mit sich selbst verschweißt werden. Durch die schlechte thermische Beständigkeit von Stärke waren diese Bänder jedoch als Umreifungsband vollkommen ungeeignet, da die Schweißstelle bei der für Umreifungsbänder üblichen Zugbelastung brach. Dadurch, dass Stärke zu den Polysachariden gehört, waren diese damaligen Bänder auch nicht hydrolysebeständig und hatten eine niedrige Wärmeformbeständigkeit. Technische Stärke ist zudem üblicherweise zu einem sehr hohen Anteil mit anderen Komponenten wie Polyhydroxybuttersäure versetzt, was weitere Nachteile mit sich bringt. Die damals entwickelten Bänder waren als Umreifungsbänder ungeeignet (vgl. DE 295 20 448 U1, DE 295 20 449 U1 oder auch EP 0 799 335 B1).

DE 196 54 030 C2 beschreibt einen textilen Aufwuchsträger, bei dem eine seilartige dreidimensionale Maschenstruktur aus Polyethylen vorgesehen ist. Dieses Polyethylen wird in Spalte 2 Zeile 35 als typisches Material von Umreifungsbändern für Verpackungsautomaten beschrieben. Zusätzlich zu diesem Material für die Maschenstruktur weist der beanspruchte Aufwuchsträger auch ein Textilgebilde auf, das als Anwuchsfläche für Mikroorganismen dienen soll. Dieses Textilgebilde kann aus abbaubaren organischen Substanzen bestehen (Spalte 1 Zeile 18). Dem damaligen Fachmann ist trotz der klar gestellten technischen Aufgabe nicht in den Sinn gekommen, auch als Material für die seilartige Maschenstruktur ein abbaubares organisches Material einzusetzen. Dies zeigt, dass es offenbar ein Vorurteil dagegen gab, organische abbaubare Materialien für Umreifungsbänder einzusetzen.

DE 44 46 054 A1 beschreibt hochfeste Fäden aus nachwachsenden Rohstoffen auf Stärkebasis. Als mögliche Anwendung werden auf Seite 4 in Zeile 46 auch unter anderem Umreifungsbanderolen erwähnt. Gewebte Umreifungsbanderolen haben neben ihrer aufwändigen Herstellungsweise jedoch verschiedene Nachteile, sodass sie sich nicht durchsetzen konnten.

JP-A-2001019027 beschreibt ein extrudiertes und mit sich selbst verschweißbares Umreifungsband aus einem Material, das nachwachsenden Rohstoff wie Polymilchsäure enthält.

WO-A-9300210 beschreibt extrudiertes und mit sich selbst verschweißbares Umreifungsband aus einem Material, wobei der nachwachsende Rohstoff mit Vinylacetatderivaten modifiziert ist.

JP 2002 358445 A, DE 94 19 475 U1, JP 2004 034994 A, DE 295 20 449 U1 beschreiben ein extrudiertes und mit sich selbst verschweißbares Umreifungsband.

Aufgabe der vorliegenden Erfindung ist es daher, ein Umreifungsband bereitzustellen, das so mit sich selbst verschweißbar ist, dass es nachher auch die nötige Zugfestigkeit für die Anwendung als Umreifungsband und die notwendige Wärmeformbeständigkeit und Hydrolysestabilität mitbringt und auf der anderen Seite möglichst biologisch abbaubar ist.

Die der Erfindung zugrundeliegende Aufgabe wird in einer ersten Ausführungsform gelöst durch ein extrudiertes und mit sich selbst verschweißbares Umreifungsband aus einem Material, das Polymilchsäure als nachwachsenden Rohstoff enthält, wobei die Polymilchsäure zu wenigstens 90 Gew.% aus L-Milchsäure hergestellt ist, und der nachwachsende Rohstoff mit einem Kupplungsreagenz modifiziert ist, das ein Vinylacetatderivat ist.

Erstmals konnten so biologisch abbaubare Umreifungsbänder zur Verfügung gestellt werden, die für die Anwendung als Umreifungsband notwendige Hydrolysestabilität und Wärmeformbeständigkeit sowie die Zugfestigkeit mitbringen.

Vorzugsweise ist der nachwachsende Rohstoff ausgewählt aus der Gruppe Cellulose, aliphatischer Polyester, Polyamid, aliphatisches Polyesteramid, Polyhydroxyalkanoat, Polyvinylalkohol, Polyalkylenglycol, Lignin oder ein Copolymer, das zumindest eine der Verbindungen enthält, oder Mischungen oder Derivate derselben. Im Unterschied zu den bislang bekannten stärkebasierten Paketbändern konnten so erstmals biologisch abbaubare Umreifungsbänder erhalten werden, die eine besonders hohe Hydrolysestabilität und hohe Wärmeformbeständigkeit aufwiesen. Stärke hatte als Polysacharid auch den weiteren Nachteil, dass sich beispielsweise die Paketbänder aus Stärke beim Verschweißen thermisch zersetzt haben und dadurch die Schweißpunkte quasi zu Sollbruchstellen wurden. Diese Nachteile konnten mit dieser bevorzugten Ausführungsform überwunden werden. Daher liegt der Stärkeanteil im erfindungsgemäßen Umreifungsband auch vorzugsweise bei höchstens 10 Gew.%, insbesondere höchstens 5 Gew.%. Ganz besonders bevorzugt enthält das erfindungsgemäße Umreifungsband gar keine Stärke. Ein weiterer Nachteil der stärkebasierten und aus dem Stand der Technik bekannten Verpackungsbänder war auch, dass technische Stärke üblicherweise zu über 50 Gew.% beispielsweise aus Polyhydroxybuttersäure besteht.

Vorzugsweise ist der nachwachsende Rohstoff ein aliphatischer Polyester, besonders bevorzugt Polymilchsäure (PLA), Polybutylen-succinat (PBS) oder Mischungen oder Derivate derselben. Diese speziellen aliphatischen Polyester haben sich als besonders geeignet erwiesen, da die so erhaltenen Umreifungsbänder eine besonders gute Hydrolysestabilität und eine hohe Wärmeformbeständigkeit aufwiesen.

Die Polymilchsäure ist zu wenigstens 90 Gew.% aus L-Milchsäure hergestellt. Überraschend hat sich nämlich gezeigt, dass so ein besonders hoher Kristallisationsgrad erzielt werden konnte, sodass diese Bänder besonders gut verstreckt werden konnten. Bänder mit einem höheren Anteil an D-Säure schienen eher ein amorphes Polymer zu ergeben, das für die Verstreckung nicht so geeignet war.

Der nachwachsende Rohstoff ist mit einem Kupplungsreagenz modifiziert, das ein Vinylacetatderivat ist. Dadurch kann ein ganz neuer Rohstoff erhalten werden, der für die Anwendung als Umreifungsband überraschend gut geeignet ist. Vor allem kann hierdurch die ansonsten mit Nachteilen behaftete Stärke so modifiziert werden, dass sie sogar für die Anwendung als Umreifungsband geeignet sein kann.

Vorteilhafterweise enthält das Material des Umreifungsbands wenigstens 10 Gew.%, besonders bevorzugt wenigstens 70 Gew.% nachwachsende Rohstoffe. Dadurch kann gewährleistet werden, dass das Umreifungsband besonders gut biologisch abbaubar ist.

Vorzugsweise ist das Umreifungsband verstreckt, insbesondere monoaxial verstreckt, ganz besonders bevorzugt wenigstens 1 : 3 verstreckt. Hierdurch können die für ein Umreifungsband besonders wichtigen Eigenschaften wie Zugfestigkeit, Reißkraft und Dehnungsverhalten besonders günstig beeinflusst werden. Die Breite des erfindungsgemäßen Umreifungsbandes liegt beispielsweise in einem Bereich von 3 mm bis 50 mm, insbesondere in einem Bereich von 4 mm bis 32 mm. Die Dicke des erfindungsgemäßen Umreifungsbandes liegt beispielsweise in einem Bereich von 0,2 mm bis 2 mm, insbesondere in einem Bereich von 0,4 mm bis 1,5 mm. Dabei kann die Oberfläche des Bandes beispielsweise entweder glatt oder durch ein Prägeprofil aufgeraut sein. Das Umreifungsband wird auf eine Rolle mit meist 1000 m bis 8000 m Bandlänge aufgewickelt. Diese Abmessungen führen zu einer besonders guten Eignung des Umreifungsbandes für seine Bestimmung, nämlich der automatischen Umreifung von Gegenständen mittels halbautomatischer oder vollautomatischer Umreifungsvorrichtungen.

Die Schmelze-Volumenfließrate (MVR) nach DIN EN ISO 1133 liegt bei 190 °C und 2,16 kg beispielsweise in einem Bereich von 3 bis 8. Die Glasübergangstemperatur des nachwachsenden Rohstoffes liegt beispielsweise in einem Bereich von 50 °C bis 80 °C. Die Dichte des nachwachsenden Rohstoffes liegt beispielsweise in einem Bereich von 1,1 g/cm³ bis 1,4 g/cm³. Der Schmelzpunkt des nachwachsenden Rohstoffes liegt beispielsweise in einem Bereich von 130 °C bis 200 °C. Diese Eigenschaften des nachwachsenden Rohstoffes haben sich als besonders geeignet erwiesen, ein leicht herstellbares Umreifungsband mit guten mechanischen Eigenschaften zu erhalten.

Vorzugsweise liegt das Gewichtsmittel der Molmasse M_{w} des nachwachsenden Rohstoffes in einem Bereich von 20.000 g/mol bis 300.000 g/mol, insbesondere in einem Bereich von 100.000 g/mol bis 220.000 g/mol. Solche nachwachsenden Rohstoffen führen überraschenderweise zu Umreifungsbändern mit einem besonderen ausgewogenen Verhältnis zwischen geringer Sprödigkeit und hoher Zugfestigkeit.

Übliche Zusatzstoffe, Additive und sonstige Modifier können beispielsweise zu 0 Gew.% bis 10 Gew.%, insbesondere zu 0,5 Gew.% bis 2 Gew.% enthalten sein.

Das Material des Umreifungsbandes kann neben dem nachwachsenden Rohstoff zu 10 Gew.% bis 90 Gew.% ein weitere thermoplastische und gegebenenfalls biologisch abbaubare Materialien enthalten.

Bei dem nachwachsenden Rohstoff kann es sich auch um ein Copolymer, insbesondere um ein Copolymer von Polymilchsäure handeln. Dabei beträgt der Monomeranteil von L-Milchsäure in der Vorstufe zu Polymilchsäure vorzugsweise mehr als 10 %, insbesondere mehr als 50 %, ganz besonders bevorzugt mehr als 90 %.

Vorzugsweise beträgt der Fasergehalt des erfindungsgemäßen Umreifungsbandes höchstens 10 Gew.%, insbesondere höchstens 1 Gew.%. Ganz besonders bevorzugt enthält das erfindungsgemäße Umreifungsband keine Fasern. Hierdurch können Inhomogenitäten der Eigenschaften insbesondere bei der Verarbeitung von Fasern gemeinsam mit thermoplastischen Materialien beispielsweise durch Lufteinschlüsse vermieden werden.

Das erfindungsgemäße Umreifungsband ist beispielsweise durch Ultraschallschweißen, Laserschweißen, Reibschweißen und/oder Kontaktschweißen verschweißbar.

Das erfindungsgemäße Umreifungsband kann beispielsweise geprägt oder auch glatt sein.

In einer weiteren Ausführungsform wird die der Erfindung zugrundeliegende Aufgabe gelöst durch ein Verfahren zur Herstellung von einem erfindungsgemäßen Umreifungsband, dadurch gekennzeichnet, dass man wenigstens die folgenden Schritte ausführt:
a) Aufschmelzen und Extrudieren eines Materials, das nachwachsenden Rohstoff enthält, und
b) Abkühlen der Schmelze in einem Fluid, und
c) Verstrecken, Fixieren und/oder Abkühlen des erhaltenen Bandes.

Hierbei liegt die Extrusiontemperatur beispielsweise in einem Bereich von 170 °C bis 250 °C, besonders bevorzugt in einem Bereich von 190 °C bis 220 °C. Als Rohstoff kann Granulat eingesetzt werden. Es kann ein Einschnecken- oder Doppelscheckenextruder eingesetzt werden. Bei der Extrusion kann zur Formgebung eine Schlitzdüse zum Einsatz kommen.

Vorzugsweise wird das Extrudat unmittelbar nach der Extrusion in ein Wasserbad geleitet. Dieses Wasserbad hat beispielsweise eine Temperatur im Bereich von 5 °C bis 75 °C. Beispielsweise kann das Umreifungsband dann monoaxial in unterschiedlichen Fluiden verstreckt werden. Besonders bevorzugt kann die Verstreckung in Luft oder Wasser stattfinden. Beispielsweise wird das Umreifungsband in einem Verhältnis von 1 : 3 bis 1 : 8 verstreckt. Anschließend kann das entstandene Umreifungsband ggf. geprägt werden.

Anschließend kann das Umreifungsband in Luft fixiert werden und in Luft oder im wässrigen Medium abgekühlt werden und anschließend ggf. aufgespult werden.

In einer weiteren Ausführungsform wird die der Erfindung zugrundeliegende Aufgabe gelöst durch ein Verfahren zum Umreifen eines Objektes mit einem erfindungsgemäßen Umreifungsband, dadurch gekennzeichnet, dass man das Umreifungsband um das Objekt herum anordnet, so dass das Umreifungsband zumindest an einer Stelle mit sich selbst überlappt, und man anschließend an dieser Stelle die überlappenden Stellen des Umreifungsbandes miteinander verschweißt.

Die Verschweißung kann mittels Reibschweißen, Laserschweißen oder Heizkeilschweißen geschehen. Besonders bevorzugt werden die überlappenden Stellen mittels Ultraschallschweißen miteinander verschweißt.

Bislang war es praktisch nicht möglich gewesen, vor allem verstreckte nachwachsende Rohstoffe und insbesondere aliphatische Polyester wie beispielsweise Polymilchsäure zu verschweißen. Es gab das Vorurteil, dass gerade nachwachsende Rohstoffe dadurch thermisch degradiert würden und sich die mechanischen Eigenschaften so stark verschlechtern würden, dass ein Einsatz als Umreifungsband nicht mehr möglich gewesen wäre. Es wurde nun überraschend gefunden, dass nachwachsende Rohstoffe mittels Ultraschallschweißen verschweißt werden können, ohne die grundsätzliche Eignung als Umreifungsband mit der beispielsweise hierzu notwendigen erheblichen Zugfestigkeit zu verlieren.

### Ausführungsbeispiel

Granulat von Polymilchsäure (PLA Polymer 4032D der Firma NatureWorks), welches eine L-Polymilchsäure ist, wurde aufgeschmolzen und bei 220 °C durch eine Schlitzdüse mit einem Einschneckenextruder extrudiert. Das Extrudat wurde in ein Wasserbad mit einer Temperatur von 50 °C geleitet und anschließend in Luft 1 : 4 verstreckt. Anschließend wurde das entstandene Band in Luft fixiert und abgekühlt und dann aufgespult. Mit diesem entstandenen Umreifungsband wurde anschließend testweise ein üblicher Umzugskarton umreift, indem das Band um den Umzugskarton herumgelegt wurde, sodass sich beide Enden des Umreifungsbandes 2 cm überlappten. Die überlappenden Enden des Umreifungsbandes wurden mittels Ultraschallschweißen miteinander verschweißt. Insgesamt wurden die Herstellungsparameter und insbesondere die Dicke und Breite der Schlitzdüse beim Extrudieren so gewählt, dass nach dem Verstrecken ein Umreifungsband mit einer Dicke von 0,7 mm und einer Breite von 12 mm entstand.

Das erfindungsgemäß hergestellte Umreifungsband war an der Oberfläche geprägt und hatte eine Reißfestigkeit von mehr als 145 N/mm² (nach DIN 53504). Die Reißdehnung betrug weniger als 20 % (nach DIN 53504). Es konnte keine Degradierung durch Hydrolyse beobachtet werden. Das erhaltene Umreifungsband war hydrolysestabil. Weiterhin war das erhaltene Umreifungsband bis wenigstens 70 °C wärmeformbeständig.

## Patentansprüche

1. Extrudiertes und mit sich selbst verschweißbares Umreifungsband aus einem Material, das Polymilchsäure als nachwachsenden Rohstoff enthält, wobei die Polymilchsäure zu wenigstens 90 Gew.% aus L-Milchsäure hergestellt ist, und der nachwachsende Rohstoff mit einem Kupplungsreagenz modifiziert ist, das ein Vinylacetatderivat ist.

2. Umreifungsband gemäß Anspruch 1, **dadurch gekennzeichnet, dass** es verstreckt ist, insbesondere monoaxial verstreckt ist, ganz besonders bevorzugt wenigstens 1 zu 3 verstreckt ist.

3. Umreifungsband gemäß einem der Ansprüche 1 bis 2, **dadurch gekennzeichnet, dass** das Gewichtsmittel der Molmasse M_{w} des nachwachsenden Rohstoffes in einem Bereich von 20.000 bis 300.000 g/mol, insbesondere in einem Bereich von 100.000 bis 220.000 g/mol liegt.

4. Umreifungsband gemäß einem der Ansprüche 1 bis 3, **dadurch gekennzeichnet, dass** der Fasergehalt höchstens 10 Gew.%, insbesondere höchstens 1 Gew.% beträgt.

5. Verfahren zu Herstellung von einem Umreifungsband gemäß einem der Ansprüche 1 bis 4, **dadurch gekennzeichnet, dass** man wenigstens die folgenden Schritte ausführt:
a) Aufschmelzen und Extrudieren eines Materials, das nachwachsenden Rohstoff enthält, und
b) Abkühlen der Schmelze in einem Fluid, und
c) Verstrecken, Fixieren und/oder Abkühlen des erhaltenen Bandes.

6. Verfahren zum Umreifen eines Objektes mit einem Umreifungsband gemäß einem der Ansprüche 1 bis 4, **dadurch gekennzeichnet, dass** man das Umreifungsband um das Objekt herum anordnet, so dass das Umreifungsband zumindest an einer Stelle mit sich selbst überlappt, und man anschließend an dieser Stelle die überlappenden Stellen des Umreifungsbandes miteinander verschweißt.

7. Verfahren gemäß Anspruch 6, **dadurch gekennzeichnet, dass** man die überlappenden Stellen mittels Heizkeilschweißen, Reibschweißen oder Laserschweißen und besonders bevorzugt mittels Ultraschallschweißen miteinander verschweißt.

## Claims

1. An extruded strapping tape which may be welded with itself and is made of a material containing polylactic acid as renewable raw material, wherein at least 90% by weight of the polylactic acid is made of L-lactic acid and the renewable raw material is modified with a coupling reagent that is a vinyl acetate derivative.

2. The strapping tape according to claim 1, **characterised in that** it is stretched, in particular stretched monoaxially, very particularly preferably stretched at least 1: 3.

3. The strapping tape according to any one of claims 1 to 2, **characterised in that** the weight average of the molar mass, Mw, of the renewable raw material is in a range from 20,000 to 300,000 g/mol, in particular in a range from 100,000 to 220,000 g/mol.

4. The strapping tape according to any one of claims 1 to 3, **characterised in that** the fibre content is at most 10% by weight, in particular at most 1% by weight.

5. A process for manufacturing a strapping tape according to any one of claims 1 to 4, **characterised in that** at least the following steps are performed:
a) melting and extrusion of a material that contains renewable raw material and
b) cooling the melt in a fluid and
c) stretching, fixing and/or cooling the obtained tape.

6. A process for strapping an object with a strapping tape according to any one of claims 1 to 4, **characterised in that** the strapping tape is placed around the object such that the strapping tape overlaps with itself at least at one point and the overlapping points of the strapping tape are welded together at this point.

7. The process according to claim 6, **characterised in that** the overlapping points are welded together by heated wedge welding, friction welding or laser welding and particularly preferably by ultrasonic welding.

## Revendications

1. Bande de cerclage extrudée et pouvant être reliée à elle-même par soudure, en un matériau qui contient de l'acide polylactique en tant que matière première renouvelable, dans laquelle l'acide polylactique contient au moins 90 % en poids d'acide L-lactique, et la matière première renouvelable est modifiée à l'aide d'un réactif de couplage qui est un dérivé d'acétate de vinyle.

2. Bande de cerclage selon la revendication 1, **caractérisée en ce qu'**elle est étirée, en particulier est étirée monoaxialement, de manière bien plus préférée au moins étirée dans un rapport de 1 à 3 fois.

3. Bande de cerclage selon la revendication 1 ou 2, **caractérisée en ce que** la masse moléculaire moyenne en poids Mw de la matière première renouvelable est dans une plage de 20 000 à 300 000 g / mol, de préférence dans une plage de 100 000 à 220 000 g / mol.

4. Bande de cerclage selon l'une quelconque des revendications 1 à 3, **caractérisée en ce que** la teneur en fibres est d'au plus 10 % en poids, en particulier d'au plus 1 % en poids.

5. Procédé de fabrication d'une bande de cerclage selon l'une quelconque des revendications 1 à 4, **caractérisée par** la mise en œuvre d'au moins des étapes suivantes :
a) la fusion et l'extrusion d'un matériau contenant une matière première renouvelable, et
b) le refroidissement de la masse fondue dans un fluide, et
c) l'étirement, la fixation et/ou le refroidissement de la bande obtenue.

6. Procédé pour le cerclage d'un objet à l'aide d'une bande de cerclage selon l'une quelconque des revendications 1 à 4, **caractérisé par** l'agencement de la bande autour d'un objet de telle sorte que la bande se chevauche elle-même au moins en un point, et ensuite, à ce stade, le soudage de la bande de cerclage avec elle-même au niveau des points de chevauchements.

7. Procédé selon la revendication 6, **caractérisée en ce que** les soudures au niveau des points de chevauchement se font par soudage au fer à souder, soudage par friction ou soudage par laser, et plus particulièrement de préférence au moyen d'un soudage par ultrasons.
